(19) Europäisches Patentamt
European Patent Office
Office européen des brevets

(11) **EP 4 783 652 A1**

(12) **EUROPEAN PATENT APPLICATION**
published in accordance with Art. 153(4) EPC

(43) Date of publication:
**29.07.2026 Bulletin 2026/31**

(21) Application number: **24884369.0**

(22) Date of filing: **08.10.2024**

(51) International Patent Classification (IPC):
**H04W 24/08** (2009.01)

(52) Cooperative Patent Classification (CPC):
**H04W 24/08; H04W 72/0446; H04W 72/1263;
H04W 72/20; H04W 72/50**

(86) International application number:
**PCT/CN2024/123350**

(87) International publication number:
**WO 2025/092365 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.10.2023 CN 202311435442**

(71) Applicant: **HUAWEI TECHNOLOGIES CO., LTD.
Shenzhen 518129 (CN)**

(72) Inventors:
• **PANG, Xu
Shenzhen, Guangdong 518129 (CN)**

• **CAO, Youlong
Shenzhen, Guangdong 518129 (CN)**
• **FU, Yu
Shenzhen, Guangdong 518129 (CN)**
• **XU, Rui
Shenzhen, Guangdong 518129 (CN)**
• **QIN, Yi
Shenzhen, Guangdong 518129 (CN)**

(74) Representative: **Gill Jennings & Every LLP
The Broadgate Tower
20 Primrose Street
London EC2A 2ES (GB)**

(54) **MEASUREMENT METHOD AND APPARATUS**

(57)    This application provides a measurement method and an apparatus. The method includes: receiving first configuration information, where the first configuration information includes first information and second information, the first information indicates a length of each of at least two first measurement gaps, the at least two first measurement gaps are in a first measurement period, there is an interval in time domain between two adjacent first measurement gaps among the at least two first measurement gaps, and the second information indicates a start time point of each of the at least two first measurement gaps; and performing inter-frequency measurement in the at least two first measurement gaps. According to the measurement method and the apparatus provided in embodiments of this application, conflicts between a measurement time period and a service data transmission time period can be reduced.

FIG. 4

## Description

This application claims priority to Chinese Patent Application No. 202311435442.4, filed with the China National Intellectual Property Administration on October 30, 2023 and entitled "MEASUREMENT METHOD AND APPARATUS", which is incorporated herein by reference in its entirety.

## TECHNICAL FIELD

This application relates to the field of wireless technologies, and specifically, to a measurement method and an apparatus.

## BACKGROUND

In mobile cellular networks, when moving from one cell to another cell, a terminal device needs to be handed over between cells. Before handover, the terminal device needs to measure signals of neighboring cells, to determine when to perform handover. There are typically two types of measurements: intra-frequency measurement and inter-frequency measurement. For inter-frequency measurement, a common way of performing inter-frequency measurement is to install two types of radio frequency receivers in the terminal device, to respectively measure a frequency of a local cell and a frequency of a target cell. However, this increases costs and causes mutual interference between different frequencies. Therefore, the 3rd generation partnership project (3rd generation partnership project, 3GPP) proposes the concept of measurement gap (measurement gap, MG). MG is a technique in which a period of time (MG time) is reserved, during which the UE does not send or receive any data, but tunes a receiver to the frequency of the target cell for inter-frequency measurement, and tunes the receiver back to the current local cell after the end of the MG time.

Extended reality (extended reality, XR) services are a type of multimedia service characterizing by stringent real-time requirements and high data capacity requirements, and they pose strict constraints on latency. However, an XR data arrival period is a non-integer, and hardly matches an MG period. Further, transmission of XR service data conflicts with the MG. As a result, it is difficult to ensure reliability of the XR services. Therefore, there is an urgent need for a method to resolve the conflicts between XR data transmission and MG.

## SUMMARY

This application provides a measurement method and an apparatus, to reduce conflicts between a measurement time period and a service data transmission time period.

According to a first aspect, a measurement method is provided, and includes: receiving first configuration information, where the first configuration information includes first information and second information, the first information indicates a length of each of at least two first measurement gaps, the at least two first measurement gaps are in a first measurement period, there is an interval in time domain between two adjacent first measurement gaps among the at least two first measurement gaps, and the second information indicates a start time point of each of the at least two first measurement gaps; and performing inter-frequency measurement in the at least two first measurement gaps.

The configuration method in the first aspect may be performed by a terminal device, may be a module (for example, a chip system) of the terminal device, or may be a logical node, a logical module, or software that can implement all or a part of functions of the terminal device. This is not limited herein.

In this embodiment provided in this application, the at least two first measurement gaps are configured in the first measurement period, and there is the interval in time domain between the two adjacent first measurement gaps among the at least two first measurement gaps, so that measurement time periods in the first measurement period can be distributed in a decentralized manner. When there is data to be sent, the terminal device can send the data in a closest slot in which the first measurement gap is not configured. In this way, conflicts between the measurement time period and a service data transmission time period are reduced, and inter-frequency measurement performance is ensured.

With reference to the first aspect, in some implementations of the first aspect, the first configuration information is further used to configure a quantity of first measurement gaps in the first measurement period.

In this embodiment provided in this application, the first configuration information is used to configure the quantity of first measurement gaps in the first measurement period. Therefore, the terminal device can determine a quantity of times of inter-frequency measurement in the first measurement period.

With reference to the first aspect, in some implementations of the first aspect, the second information includes a first parameter, and the first parameter indicates an interval length between two adjacent first measurement gaps among the at least two first measurement gaps.

In this embodiment provided in this application, the second information includes the first parameter, and the first parameter indicates the interval length between the two adjacent first measurement gaps among the at least two first measurement gaps. Therefore, the terminal device can determine a time domain position of each of the at least two first measurement gaps based on the first parameter, and form sparsely distributed measurement gaps in the first measurement period.

With reference to the first aspect, in some implementations of the first aspect, the second information further includes a first offset and a length of the first measurement period, a start time point of a 1st first measurement gap among the at least two first measurement gaps is determined based on the first offset and the length of the first measurement period, and a start time point of a first measurement gap among the at least two first measurement gaps other than the 1st first measurement gap is determined based on the start time point of the 1st first measurement gap, lengths of the at least two first measurement gaps, and the first parameter.

In this embodiment provided in this application, the second information includes the first offset and the length of the first measurement period. Therefore, the terminal device can determine a time domain position of the 1st first measurement gap among the at least two first measurement gaps based on the first offset and the length of the first measurement period, and can further determine a time domain position of a subsequent first measurement gap based on the time domain position of the first measurement gap, the first parameter, and a length of each first measurement gap and configure sparsely distributed first measurement gaps in the first measurement period, to reduce conflicts between a measurement time period and service data transmission.

With reference to the first aspect, in some implementations of the first aspect, a value range of the first parameter meets the following condition: $0<\mathrm{MGG}\leq\lfloor(\mathrm{MGRP}-\mathrm{L})/(\mathrm{N}-1)\rfloor$, where the MGG is a value of the first parameter, the MGRP is the length of the first measurement period, L is a total length of the at least two first measurement gaps, N is the quantity of first measurement gaps in the first measurement period, and $\lfloor\ \rfloor$ represents rounding down.

In this embodiment provided in this application, the value range of the first parameter meets:

$$0<\mathrm{MGG}\leq\lfloor(\mathrm{MGRP}-\mathrm{L})/(\mathrm{N}-1)\rfloor$$

, to reduce overlapping between first measurement gaps in a plurality of measurement periods.

With reference to the first aspect, in some implementations of the first aspect, the second information includes a second parameter, and the second parameter indicates an interval length between a first measurement gap among the at least two first measurement gaps other than a 1st first measurement gap in the first measurement period and the 1st first measurement gap.

In this embodiment provided in this application, the second information includes the second parameter, and the second parameter indicates the interval length between the first measurement gap among the at least two first measurement gaps other than the 1st first measurement gap in the first measurement period and the 1st first measurement gap. Therefore, the terminal device can determine a time domain position of each of the at least two first measurement gaps based on the second parameter, and then perform inter-frequency measurement at the determined time domain position of the first measurement gap.

With reference to the first aspect, in some implementations of the first aspect, the second information further includes a first offset and a length of the first measurement period, and start time points of the at least two first measurement gaps satisfy: $\mathrm{SFN[i]}\%(\mathrm{MGRP}/10)=\lfloor(\mathrm{GO}+\mathrm{GOO[i]})/10\rfloor$, and SF[i]=(GO+GOO[i])%10. % indicates a modulo operation, $\lfloor\ \rfloor$ represents rounding down, SFN[i] is a radio frame number to which a start time point of an ith first measurement gap belongs, SF[i] is a start subframe number of the start time point of the ith first measurement gap in a radio frame to which the start time point of the ith first measurement gap belongs, the GO is the first offset, GOO[i] is an interval length between the ith first measurement gap and the 1st first measurement gap, i is an integer greater than or equal to 1, and the MGRP is the length of the first measurement period.

In this embodiment provided in this application, the second information includes the first offset and the length of the first measurement period, and the start time points of the at least two measurement gaps satisfy the formulas. Therefore, the terminal device can determine a time domain position of each first measurement gap in the first measurement period, and configure sparsely distributed first measurement gaps in the first measurement period, to reduce conflicts between a measurement time period and service data transmission.

With reference to the first aspect, in some implementations of the first aspect, the second information includes a third parameter, and the third parameter indicates the start time point of each of the at least two first measurement gaps.

In this embodiment provided in this application, the second information includes the third parameter, and the third parameter indicates the start time point of each of the at least two first measurement gaps. Therefore, the terminal device can directly determine the start time point of each of the at least two first measurement gaps based on the third parameter, and configure sparsely distributed first measurement gaps in the first measurement period, to reduce conflicts between a measurement time period and service data transmission.

With reference to the first aspect, in some implementations of the first aspect, the first configuration information further indicates a length of the first measurement period, and start time points of the at least two first measurement gaps satisfy: $SFN[i]\%(MGRP/10)=\lfloor(GO[i]/10)\rfloor$, and SF[i]=GO[i]%10. % indicates a remainder function, $\lfloor\ \rfloor$ is a rounding-down function, SFN[i] is a radio frame number of an ith first measurement gap, SF[i] is a start subframe number of the ith first measurement gap in a radio frame to which the ith first measurement gap belongs, GO[i] indicates a start time point of the ith first measurement gap, i is an integer greater than or equal to 1, and the MGRP is the length of the first measurement period.

In this embodiment provided in this application, the start time points of the at least two measurement gaps satisfy the formulas. Therefore, the terminal device can determine the start time points of the at least two first measurement gaps, and configure sparsely distributed first measurement gaps in the first measurement period, to reduce conflicts between a measurement time period and service data transmission.

According to a second aspect, a measurement method is provided. The method includes: sending first configuration information, where the first configuration information includes first information and second information, the first information indicates a length of each of at least two first measurement gaps, the at least two first measurement gaps are in a first measurement period, there is an interval in time domain between two adjacent first measurement gaps among the at least two first measurement gaps, and the second information indicates a start time point of each of the at least two first measurement gaps. The at least two first measurement gaps are used by a terminal device to perform inter-frequency measurement.

Technical solutions described in the second aspect may be performed by a network device, may be a module (for example, a chip system) of the network device, or may be a logical node, a logical module, or software that can implement all or a part of functions of the network device. This is not limited herein.

With reference to the second aspect, in some implementations of the second aspect, the first configuration information is further used to configure a quantity of first measurement gaps in the first measurement period.

With reference to the second aspect, in some implementations of the second aspect, the second information includes a first parameter, and the first parameter indicates an interval length between two adjacent first measurement gaps among the at least two first measurement gaps.

With reference to the second aspect, in some implementations of the second aspect, the second information further includes a first offset and a length of the first measurement period, a start time point of a 1st first measurement gap among the at least two first measurement gaps is determined based on the first offset and the length of the first measurement period, and a start time point of a first measurement gap among the at least two first measurement gaps other than the 1st first measurement gap is determined based on the start time point of the 1st first measurement gap, lengths of the at least two first measurement gaps, and the first parameter.

With reference to the second aspect, in some implementations of the second aspect, a value range of the first parameter meets the following condition: $0<MGG\leq\lfloor(MGRP-L)/(N-1)\rfloor$, where the MGG is a value of the first parameter, the MGRP is the length of the first measurement period, L is a total length of the at least two first measurement gaps, N is the quantity of first measurement gaps in the first measurement period, and $\lfloor\ \rfloor$ represents rounding down.

With reference to the second aspect, in some implementations of the second aspect, the second information includes a second parameter, and the second parameter indicates an interval length between a first measurement gap among the at least two first measurement gaps other than a 1st first measurement gap in the first measurement period and the 1st first measurement gap.

With reference to the second aspect, in some implementations of the second aspect, the second information further includes a first offset and a length of the first measurement period, and start time points of the at least two first measurement gaps satisfy: $SFN[i]\%(MGRP/10)=\lfloor(GO+GOO[i])/10)\rfloor$, and SF[i]=(GO+GOO[i])%10. % indicates a modulo operation, $\lfloor\ \rfloor$ represents rounding down, SFN[i] is a radio frame number to which a start time point of an ith first measurement gap belongs, SF[i] is a start subframe number of the start time point of the ith first measurement gap in a radio frame to which the start time point of the ith first measurement gap belongs, the GO is the first offset, GOO[i] is an interval length between the ith first measurement gap and the 1st first measurement gap, i is an integer greater than or equal to 1, and the MGRP is the length of the first measurement period.

With reference to the second aspect, in some implementations of the second aspect, the second information includes a third parameter, and the third parameter indicates the start time point of each of the at least two first measurement gaps.

With reference to the second aspect, in some implementations of the second aspect, the second information further includes a length of the first measurement period, and start time points of the at least two first measurement gaps satisfy: $SFN[i]\%(MGRP/10)=\lfloor(GO[i]/10)\rfloor$, and SF[i]=GO[i]%10. % indicates a remainder function, $\lfloor\ \rfloor$ is a rounding-down function, SFN[i] is a radio frame number of an ith first measurement gap, SF[i] is a start subframe number of

the i<sup>th</sup> first measurement gap in a radio frame to which the i<sup>th</sup> first measurement gap belongs, GO[i] indicates a start time point of the i<sup>th</sup> first measurement gap, i is an integer greater than or equal to 1, and the MGRP is the length of the first measurement period.

According to a third aspect, a communication apparatus is provided, and includes a module or unit for performing the method in any one of the first aspect or the possible implementations of the first aspect.

According to a fourth aspect, a communication apparatus is provided, and includes a module or unit for performing the method in any one of the second aspect or the possible implementations of the second aspect.

According to a fifth aspect, a communication apparatus is provided, and includes a processor. The processor is coupled to a memory, the memory is configured to store a program or instructions, and when the program or the instructions are executed by the processor, the apparatus is caused to perform the method in any one of the first aspect or the possible implementations of the first aspect.

According to a sixth aspect, a communication apparatus is provided, and includes a processor. The processor is coupled to a memory, the memory is configured to store a program or instructions, and when the program or the instructions are executed by the processor, the apparatus is caused to perform the method in any one of the second aspect or the possible implementations of the second aspect.

According to a seventh aspect, a computer-readable storage medium is provided. The computer-readable storage medium stores a computer program or instructions. When the computer program or the instructions are run on a computer, the method in any one of the first aspect and the possible implementations of the first aspect is performed; or the method in any one of the second aspect and the possible implementations of the second aspect is performed.

According to an eighth aspect, a computer program product is provided, and includes instructions. When the instructions are run on a computer, the method in any one of the first aspect and the possible implementations of the first aspect is performed; or the method in any one of the second aspect and the possible implementations of the second aspect is performed.

According to a ninth aspect, this application provides a communication system, including a terminal device and a network device. The terminal device is configured to perform the method in any one of the first aspect and the possible implementations of the first aspect; and the network device is configured to perform the method in any one of the second aspect and the possible implementations of the second aspect.

According to a tenth aspect, this application provides a chip system, including a processor. The processor is configured to execute a computer program or instructions in a memory, to cause the chip system to implement the method in any one of the first aspect and the possible implementations of the first aspect and the method in any one of the second aspect and the possible implementations of the second aspect.


## BRIEF DESCRIPTION OF DRAWINGS

FIG. 1 is a diagram of a communication system to which an embodiment of this application is applicable;
FIG. 2 is a diagram of a measurement gap mode;
FIG. 3 is a diagram of conflicts between a measurement gap and a service data transmission period;
FIG. 4 is a diagram of a measurement method according to an embodiment of this application;
FIG. 5a and FIG. 5b, FIG. 6a and FIG. 6b, FIG. 8a and FIG. 8b, and FIG. 10a and FIG. 10b are diagrams of measurement gap modes according to embodiments of this application;
FIG. 7, FIG. 9, and FIG. 11 are diagrams of matching a measurement gap with a service data transmission period according to embodiments of this application;
FIG. 12 is a diagram of another measurement method according to an embodiment of this application;
FIG. 13 to FIG. 15 are diagrams of matching a measurement gap with a service data transmission period according to this application; and
FIG. 16 and FIG. 17 are block diagrams of communication apparatuses according to embodiments of this application.


## DESCRIPTION OF EMBODIMENTS

The following describes technical solutions of this application with reference to accompanying drawings.

In descriptions of embodiments of this application, unless otherwise specified, "/" indicates "or". For example, A/B may indicate A or B. In this specification, "and/or" describes only an association relationship between associated objects and indicates that three relationships may exist. For example, A and/or B may indicate three cases: Only A exists, both A and B exist, and only B exists. In addition, in the descriptions of embodiments of this application, "a plurality of" means two or more.

The terms "first" and "second" below are merely intended for description, and shall not be understood as an indication or implication of relative importance or implicit indication of a quantity of indicated technical features. Therefore, a feature limited by the "first" or "second" may explicitly or implicitly include one or more features. In the descriptions of embodiments, unless otherwise specified, "a plurality of' means two or more.

In addition, the terms "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In embodiments of this application, the word like "example" or "for example" indicates giving an example, an illustration, or a description. Any embodiment or design scheme described as the "example" or "for example" in embodiments of this application should not be explained as being more preferred or having more advantages than another embodiment or design scheme. Exactly, use of the word like "example" or "for example" is intended to present a related concept in a specific manner for ease of understanding.

In this application, "at least one piece (item)" means one or more. "A plurality of" refers to two or more. "At least two pieces (items)" means two or three or more. "And/or" is used to describe an association relationship between associated objects, and indicates that three relationships may exist. For example, "A and/or B" may indicate three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one (piece) of a, b, and (or) c may indicate a, b, c, "a and b", "a and c", "b and c", or "a, b, and c", where a, b, and c may be singular or plural. Both "when ..." and "if' mean that corresponding processing is performed in an objective case, are not intended to limit time, do not require a determining action during implementation, and do not mean that there is another limitation.

In this application, "sending information to... (a terminal)" may be understood as that a destination end of the information is the terminal device, and may include directly or indirectly sending the information to the terminal device. "Receiving information from ... (a terminal)" may be understood as that a source end of the information is the terminal device, and may include directly or indirectly receiving the information from the terminal device. Information may undergo necessary processing, for example, a format change, between the source end and the destination end for sending of the information. However, the destination end may understand valid information from the source end. A similar expression in this application may be understood similarly. Details are not described herein again.

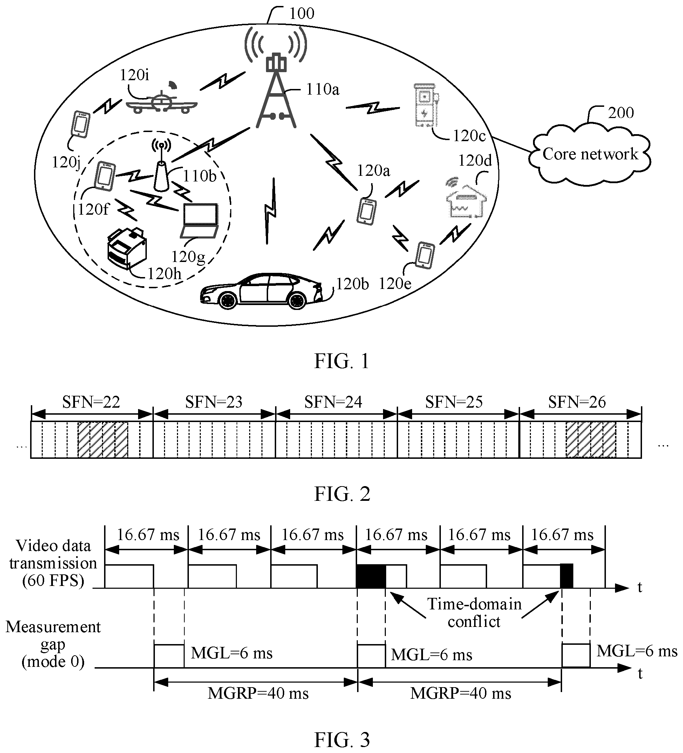

FIG. 1 is a diagram of a communication system to which an embodiment of this application is applicable. As shown in FIG. 1, the communication system includes a radio access network (radio access network, RAN) 100 and a core network (core network, CN) 200. The RAN 100 includes at least one RAN node (for example, 110a and 110b, collectively referred to as 110) and at least one terminal device (for example, 120a to 120j, collectively referred to as 120). The RAN 100 may further include another RAN node, for example, a wireless relay device and/or a wireless backhaul device (not shown in FIG. 1). The terminal device 120 is connected to the RAN node 110 in a wireless manner. The RAN node 110 is connected to a core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a 3GPP-related cellular system, for example, a 4G or 5G mobile communication system, or a future-oriented evolved system (for example, a 6G mobile communication system). The RAN 100 may alternatively be an open access network (open RAN, O-RAN or ORAN), a CRAN, or a Wi-Fi system. The RAN 100 may alternatively be a communication system that integrates two or more of the foregoing systems.

The RAN node 110 may also be sometimes referred to as a network device, an access network device, a RAN entity, an access node, or the like, and forms a part of the communication system, to help the terminal device implement radio access. A plurality of RAN nodes 110 in the communication system may be nodes of a same type, or may be nodes of different types. In some scenarios, roles of the RAN node 110 and the terminal device 120 are relative. For example, the network element 120i may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. Both the RAN node 110 and the terminal 120 are sometimes referred to as communication apparatuses. For example, the network elements 110a and 110b may be understood as communication apparatuses having a base station function, and the network elements 120a to 120j may be understood as communication apparatuses having a terminal function.

In a possible scenario, the RAN node may be a BS, an eNodeB, an access point (access point, AP), a TRP, a gNB, a next-generation base station in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario.

Optionally, the RAN node may alternatively be a server, a wearable device, a vehicle, a vehicle-mounted device, or the like. For example, an access network device in a V2X technology may be an RS. All or a part of functions of the RAN node in this application may alternatively be implemented by using a software function running on hardware, or may be implemented by using a virtualization function instantiated on a platform (for example, a cloud platform). The RAN node in this application may alternatively be a logical node, a logical module, or software that can implement all or a part of the functions of the RAN node.

In another possible scenario, a plurality of RAN nodes coordinate to assist the terminal device in implementing radio access, and different RAN nodes respectively implement some functions of a base station. For example, the RAN node may be a CU, a DU, a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different communication systems, the CU (or the CU-CP and the CU-UP), the DU, or the RU may also have a different name, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP or the CU-UP), the DU, and the RU in this application may be implemented by using a software module, a hardware module, or a combination of the software module and the hardware module.

It should be understood that a quantity of devices in the communication system is merely used as an example, and is not limited thereto. In actual application, the communication system may further include more terminal devices and more RAN devices, and may further include another device. The network device in embodiments of this application may be a device configured to communicate with the terminal device. The network device may be a base station (base transceiver station, BTS) in a GSM system or a CDMA system, may be a base station (NodeB, NB) in a WCDMA system, may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN network, or the like. For example, the network device may include an access network device and/or a core network device.

The terminal device in embodiments of this application is a device having a wireless transceiver function, may be a fixed device, or may be a mobile device, and may be user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, a terminal device in a future evolved public land mobile communication network (public land mobile network, PLMN), or the like. The terminal device may alternatively be a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to terminal devices in the following scenarios: cellular communication, device-to-device (device-to-device, D2D) communication, vehicle to everything (vehicle to everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, a robot, and the like. This is not limited in embodiments of this application.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a 5.5G system, a 6th generation (6th Generation, 6G) system, or a future communication system.

FIG. 2 is a configuration example of a measurement gap in a conventional technology. As shown in FIG. 2, a length of a radio frame corresponding to one radio frame number (system frame number, SFN) may be 10 milliseconds (ms), one radio frame may include 10 radio subframes (subframes, SFs), and a length of one subframe may be 1 ms. In time domain corresponding to a shadow area shown in the figure, UE may perform inter-frequency measurement on a target cell. In this period of time, the terminal device does not send or receive any data. Duration in which the terminal device suspends communication with a serving cell to measure an inter-frequency neighbor or another radio access technology (radio access technology, RAT) neighbor is referred to as a measurement gap MG. After an MG time ends, tuning is performed to a current local cell.

A start position of the MG time may satisfy the following formulas (1) and (2):

$$SFN\%(MGRP/10)=\lfloor GO/10 \rfloor \qquad (1)$$

$$SF=GO\%10 \qquad (2)$$

% indicates a modulo operation, and ⌊ ⌋ represents rounding down. An MGRP is a measurement gap repetition period (measurement gap repetition period, MGRP), where the MGRP specifies a gap period, to be specific, an interval length from a start time point of a current MG time to a start time point of a next MG time. A value of the MGRP may be 20 ms, 40 ms, 80 ms, 160 ms, or the like.

A GO is an offset of a gap mode (gapoffset), and a value may range from 0 to 159 and may be an integer. There are 160 offset values in total. The offset value indicates a start subframe in a periodicity, and the offset value ranges from 0 to MGRP-1. For example, if the period is 20 ms, the offset may range from 0 to 19.

A radio frame number SFN to which a start time point of the MG belongs may satisfy the foregoing formula (1), and a start subframe number of the start time point of the MG in the SFN may satisfy the foregoing formula (2). For example, when the MGRP is 40 ms, and the GO is 24 ms, SFNs configured for the MG may include 18, 22, 26, 30, and the like. In each SFN, a start subframe number may be 4. When a measurement gap length (measurement gap length, MGL) is 4 ms, the MG may be configured to perform inter-frequency cell measurement continuously for 4 ms starting from 4 ms, which is the example shown in FIG. 2. The MGL is duration of the MG, and a value may include 1.5 ms, 3 ms, 3.5 ms, 4 ms, 5.5 ms, 6 ms, and the like. For example, when the MGL is 4 ms, the terminal device continuously performs inter-frequency measurement in a same measurement period, and measurement duration is 4 ms. For positioning measurement, 10 ms and 20 ms are also applicable.

In an XR service, because an XR data arrival period is a non-integer. For example, for an XR video with a frame rate of 60 frames per second (frames per second, FPS), a frame arrival period is 1/30s, to be specific, video images of 60 frames are generated per second, and one video frame appears approximately every 16.67 ms. The XR frame arrival period may alternatively be 1/30s, 1/90s, or the like. An XR service arrival period cannot match an MG periodicity. Consequently, XR service data transmission conflicts with the MG, as shown in FIG. 3. For an XR video with a frame rate of 60 FPS, a configuration of a mode 0 is used. In other words, when a configuration in which an MGL is 6 ms, and an MGRP is 40 ms is used, transmission of two frames in every six frames is affected. However, an XR service is a service that has a high latency requirement and has a mobility or positioning measurement requirement, and an MG has great impact on service performance. Therefore, it is necessary to provide a method, to reduce conflicts between service data transmission and the MG, and improve reliability of the service.

For ease of understanding and description, the following describes a method in embodiments of this application by using interaction between a terminal device and a network device as an example. However, this should not constitute any limitation on an execution body of the method in embodiments of this application. For example, a method performed by the terminal device may alternatively be performed by a module (for example, a circuit, a chip, or a chip system) of the terminal, or may be implemented by a logical node, a logical module, or software that can implement all or a part of functions of the terminal device. For example, a method performed by the network device may alternatively be performed by a module (for example, a circuit, a chip, or a chip system) of the network device, or may be implemented by a logical node, a logical module, or software that can implement all or a part of functions of the network device.

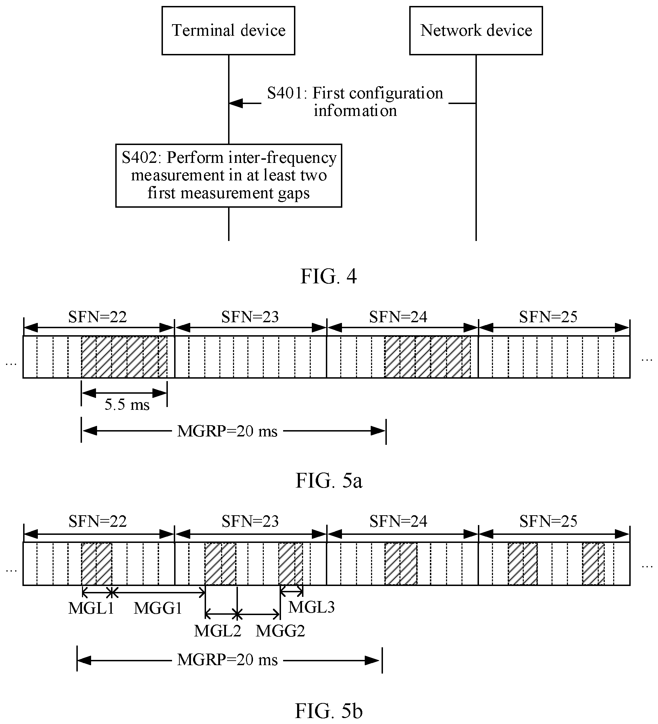

FIG. 4 shows a method for configuring an MG according to an embodiment of this application. The method may include the following steps S401 and S402.

S401: A terminal device receives first configuration information, and correspondingly, a network device sends the first configuration information, where the first configuration information includes first information and second information, the first information indicates a length of each of at least two first measurement gaps, the at least two first measurement gaps are in a first measurement period, there is an interval in time domain between two adjacent first measurement gaps among the at least two first measurement gaps, and the second information indicates a start time point of each of the at least two first measurement gaps.

S402: The terminal device performs inter-frequency measurement in the at least two first measurement gaps.

For step S401, the first configuration information may be configured by the network device and sent to the terminal device. For example, the network device may include the first configuration information in a radio resource control (radio resource control, RRC) message and send the first configuration information to the terminal device.

The second information indicates the start time point of each of the at least two first measurement gaps. The start time point of each first measurement gap may be directly configured by the network device, or a parameter related to the start time point of each first measurement gap may be provided by the network device, so that the terminal device can indirectly determine the start time point of each first measurement gap based on the parameter. The following describes a configuration manner of each first measurement gap in detail with reference to a specific implementation.

In a possible implementation, the second information may include a first parameter, and the first parameter may indicate an interval length between the two adjacent first measurement gaps among the at least two first measurement gaps, that is, an interval length between an end time point of a current first measurement gap and a start time point of a next first measurement gap. In each of the at least two first measurement gaps, the terminal device measures an inter-frequency cell, and the terminal device may normally receive/send data in the interval between the two adjacent first measurement gaps.

The first parameter may also be referred to as a measurement gap gap (measurement gap gap, MGG), or may have another name. This is not limited in this application. The first parameter may be a value. In addition, when the first parameter is the value, there is a same interval length between any two adjacent first measurement gaps among the at least two first measurement gaps. The first parameter may alternatively be a value list. When the first parameter is the value list, an interval length between two adjacent first measurement gaps among the at least two first measurement gaps may vary. The network device may specify an interval length between all adjacent first measurement gaps in the first measurement period via the first parameter. That the interval length between the two adjacent first measurement gaps varies mean that an interval between at least one group of adjacent first measurement gaps varies from an interval between another group of adjacent first measurement gaps.

In the at least two first measurement gaps in the first measurement period, a start time point of a 1st first measurement gap may be first determined, and a start time point of another first measurement gap is then determined.

In some embodiments, the second information may further include a first offset and a length of the first measurement period. The first offset may be an offset of the 1st first measurement gap in the first measurement period. The first offset may be used to determine the start time point of the 1st first measurement gap among the at least two first measurement gaps. The start time point of the 1st first measurement gap may satisfy the foregoing formulas (1) and (2). In the formulas, a GO may be the first offset, and an MGRP may be the length of the first measurement period.

Further, a start time point of a first measurement gap among the at least two first measurement gaps other than the 1st first measurement gap may be determined based on the start time point of the 1st first measurement gap, lengths of the at least two first measurement gaps, and the first parameter.

In an example, the interval length between the two adjacent first measurement gaps among the at least two first measurement gaps may vary, and the interval length between the two adjacent first measurement gaps may be configured for the terminal device in a value list form. A value list of the first parameter may be shown in Table 1. When the first parameter is the value list, the value list of the first parameter may include an interval length between any two adjacent first measurement gaps among the at least two first measurement gaps. Further, a quantity of first measurement gaps may be a quantity of interval lengths configured by the network device plus 1. For the example shown in Table 1, if the quantity of interval lengths configured by the network device is 2, the first measurement period may include three first measurement gaps MG1 to MG3, and the MG1 to the MG3 may be configured sequentially in a time order. The MGG1 may be an interval length between the MG1 and the MG2, to be specific, a time interval between an end time point of the MG1 and a start time point of the MG2. Similarly, the MGG2 may be an interval length between the MG2 and the MG3.

Table 1

| MGG[i] | Length/ms |
|--------|-----------|
| MGG1   | 6         |
| MGG2   | 3         |

Table 2

| MGL[i] | Length/ms |
|--------|-----------|
| MGL1   | 2         |
| MGL2   | 2         |
| MGL3   | 1.5       |

Lengths of first measurement gaps may alternatively vary. The network device may provide the lengths of the first measurement gaps for the terminal device in a value list form. A length list of the first measurement gaps may be shown in Table 2. The value list of the first parameter may include a length of each of the at least two first measurement gaps. The MGL1 may be a length of a 1st first measurement gap MG1 in the first measurement period, the MGL2 may be a length of a 2nd first measurement gap MG2 in the first measurement period, and the MGL3 may be a length of a 3rd first measurement gap MG3 in the first measurement period. Similarly, when the first parameter is the value list, the quantity of first measurement gaps is the same as a quantity of lengths that are of first measurement gaps and that is configured by the network device, and the quantity of lengths that are of the first measurement gaps and that is configured by the network device for the terminal device may match a quantity of intervals of first measurement gaps.

Further, when a GO configured by the network device is 14 ms, and an MGRP is 20 ms, an SFN may be a value like 22 or 24, and a start subframe number SF may be 4. A radio frame whose SFN is 22 is used as an example. A start time point of the MG1 may be a 5th subframe in the radio frame whose SFN is 22. Further, the start time point of the MG2 may be a $(2+6)$th subframe after the start time point of the MG1, namely, a 3rd subframe in an SFN being 23. Similarly, a start time point of the MG3 may be a $(2+3)$th subframe after the start time point of the MG2, namely, an 8th subframe in the SFN being 23. Therefore, the terminal device may determine that a measurement mode of the MG is a mode shown in FIG. 5a and FIG. 5b, and the terminal device performs cell measurement in a shadow area shown in the figure.

In another example, there may be a same interval length between the any two adjacent first measurement gaps among the at least two first measurement gaps, and the first parameter may be the value, for example, may be 2.5 ms. In other words, the interval length between the any two adjacent first measurement gaps among the at least two first measurement gaps may be 2.5 ms.

Each of the at least two first measurement gaps may alternatively have a same length. In other words, the first information may alternatively include a value, for example, may be 1.5 ms, to indicate that the length of each of the at least two first measurement gaps may be 1.5 ms.

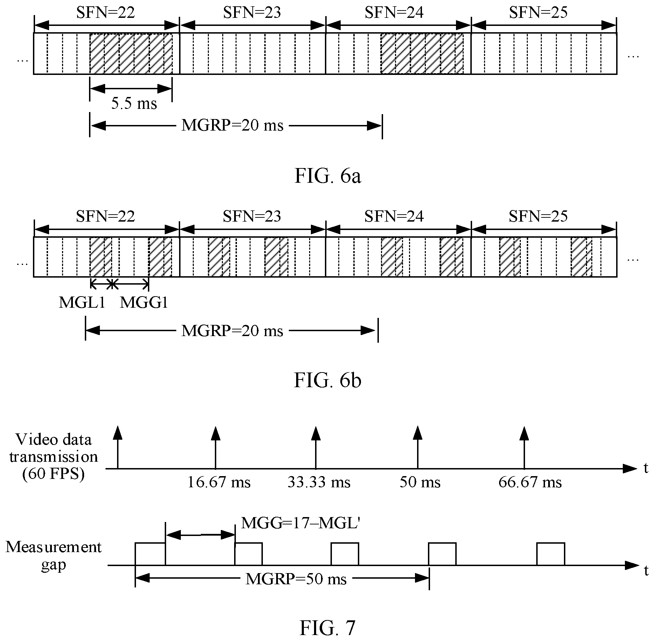

The start time point of the MG1 may satisfy the foregoing formulas (1) and (2). When the GO is 14 ms, and the MGRP may be 20 ms, the start time point of the MG1 may be a 5th subframe in the SFN being 22. Further, the start time point of the MG2 may be a $(1.5+2.5)$th subframe after the start time point of the MG1, namely, a 9th subframe in the SFN being 22. The rest can be deduced by analogy. A measurement gap configuration mode shown in FIG. 6a and FIG. 6b may be obtained.

It should be noted that in the example shown in FIG. 5a and FIG. 5b, an interval between the two adjacent first measurement gaps among the at least two first measurement gaps varies, and the lengths of the at least two first measurement gaps also vary; and in the example shown in FIG. 6a and FIG. 6b, there is a same interval between any two adjacent first measurement gaps, and lengths of at least two first measurement gaps are also the same. When there is the same interval between the any two adjacent first measurement gaps, the lengths of the at least two first measurement gaps may alternatively be configured to vary. When the lengths of the at least two first measurement gaps are the same, a length between the any two adjacent first measurement gaps may also be configured to vary. This is not limited in this application.

In some embodiments, the first configuration information may be further used to configure the quantity of first measurement gaps in the first measurement period, in other words, may configure a quantity of times of inter-frequency measurement performed by the terminal device in the first measurement period. For example, when the lengths of the at least two first measurement gaps are the same, and there is the same interval between the any two adjacent first measurement gaps, the network device may configure the quantity of first measurement gaps. In the configuration mode shown in FIG. 6a and FIG. 6b, the network device may configure four first measurement gaps. For another example, when the lengths of the at least two first measurement gaps vary, a length list is configured for the terminal device to indicate lengths of first measurement gaps. The configured length list of the first measurement gaps may indicate the quantity of first measurement gaps. In other words, the quantity of first measurement gaps may be carried in the first information, or the first configuration information may directly indicate the quantity of first measurement gaps. Similarly, when the interval between the two adjacent first measurement gaps varies, an interval length list may be configured for the terminal device to indicate an interval length between groups of two adjacent first measurement gaps. The configured interval length list between the two adjacent first measurement gaps may indicate a quantity of first measurement gaps. In other words, the quantity of first measurement gaps may be carried in the second information, or the first configuration information may directly indicate the quantity of first measurement gaps.

The quantity of first measurement gaps may be less than or equal to $\lfloor MGRP/(L+MGG) \rfloor$, where L is a total length of the at least two first measurement gaps, to reduce overlapping between a configured measurement time period in the first measurement period and a configured measurement time period in another periodicity.

When the first parameter is the value, in a possible implementation, the first parameter may be a value enumerated by the network device. For example, the value that is of the first parameter and that is enumerated by the network device may be a value like 3 ms, 5 ms, 6 ms, 7 ms, 10 ms, 11 ms, 13 ms, 14 ms, 20 ms, 22 ms, 26 ms, 29 ms, 40 ms, 45 ms, 53 ms, or 106 ms. The first parameter may be an integer, or may be a decimal value, for example, 2.5 ms or 5.5 ms.

In another possible implementation, the first parameter may be any value that is in a value range from 0 to the MGRP and that is provided by the network device.

In some embodiments, a range of the first parameter MGG may meet the following condition:

$$0 < \text{MGG} \leq \lfloor (\text{MGRP} - \text{L})/(\text{N} - 1) \rfloor$$

. $\lfloor \ \rfloor$ is a rounding-down function, L may be a sum of the lengths of the at least two first measurement gaps in the first measurement period, and N is the length of the first measurement gap in the first measurement period.

The range of the first parameter MGG meets: $0 < \text{MGG} \leq \lfloor (\text{MGRP} - \text{L})/(\text{N} - 1) \rfloor$, reducing overlapping between first measurement gaps configured in measurement periods, or reducing overlapping between at least two first measurement gaps in a current measurement period that are arranged in a next measurement period in time domain and a first measurement gap in the next measurement period.

In some embodiments, the first parameter may be a value agreed on between the network device and the terminal device. In this example, the network device may not need to include the second information in the first configuration information. For example, in step S401, the first configuration information may include only the first information, and the terminal device may prestore the agreed value. When receiving the first configuration information, the terminal device determines start time points of the at least two first measurement gaps based on the stored first parameter, and performs inter-frequency measurement in the at least two first measurement gaps based on the start time points of the at least two first measurement gaps and the lengths of the at least two first measurement gaps. When the first parameter is the value agreed on between the network device and the terminal device, there may be the same interval length between the any two of the at least two first measurement gaps.

In some embodiments, the lengths of the at least two first measurement gaps may also be values agreed on between the network device and the terminal device. In this example, the network device may not need to include the first information in the first configuration information. For example, in step S401, the first configuration information may include only the second information, and the terminal device may prestore the agreed values. When receiving the first configuration information, the terminal device determines start time points of the at least two first measurement gaps based on the first parameter provided by the network device, and performs inter-frequency measurement in the at least two first measurement gaps based on the start time points of the at least two first measurement gaps and the lengths of the at least two first measurement gaps. When the lengths of the at least two first measurement gaps are the values agreed on between the network device and the terminal device, there may be the same length between the any two of the at least two first measurement gaps.

In some embodiments, all the first parameter and the lengths of the at least two first measurement gaps may be values agreed on between the network device and the terminal device. In this example, the network device may not need to include the first information and the second information in the first configuration information, and the terminal device and the network device may not need to perform step S401. The terminal device may determine the start time points of the at least two first measurement gaps based on the stored first parameter, and perform inter-frequency measurement in the at least two first measurement gaps based on the start time points of the at least two first measurement gaps and the lengths of the at least two first measurement gaps. Similarly, when all the first parameter and the lengths of the at least two first measurement gaps are the agreed values, the lengths of the any two of the at least two first measurement gaps may be the same, and there may be the same interval length between the any two of the at least two first measurement gaps.

According to the method for configuring a measurement gap provided in embodiments of this application, sparsely distributed measurement gaps can be configured in a measurement period. When there is data to be sent, the terminal device can send the data in a closest slot in which the first measurement gap is not configured. In this way, time conflicts between a data receiving/sending service and the measurement gap can be reduced, and low-latency service performance can also be ensured.

In addition, because an XR service data transmission period is a non-integer and cannot match an MG measurement period, an XR period may be further matched in the method for configuring a measurement gap in embodiments. As shown in FIG. 7, for an XR service with a period of 50/3, that is, an XR service with a frame rate of 60 FPS, a length of a first measurement period may be 50 ms, and a value of a first parameter may be 17-MGL'. MGL' is a length of each of at least two first measurement gaps, and each of the at least two first measurement gaps may have a same length. A value of a first offset may be 0, and there may be three first measurement gaps in the first measurement period. In this way, an XR service data transmission period can match an MG measurement period, and there may be an offset of a measurement time period relative to an XR data transmission time period. Offset time may be greater than or equal to XR service data transmission latency, so that a terminal device can perform gap measurement after XR data arrives, that is, after XR data transmission is completed, to better ensure reliability of an XR service and ensure cell measurement performance.

In a possible implementation, the second information may include a second parameter, and the second parameter may indicate an interval length between the first measurement gap among the at least two first measurement gaps other than the 1st first measurement gap in the first measurement period and the 1st first measurement gap. The interval length between the first measurement gap among the at least two first measurement gaps other than the 1st first measurement gap and the 1st first measurement gap may be an interval length between the start time point of the first measurement gap among the at least two first measurement gaps other than the 1st first measurement gap and the start time point of the 1st first measurement gap; may be an interval length between an end time point of the first measurement gap other than the 1st first measurement gap and an end time point of the 1st first measurement gap; or may be an interval length between an intermediate moment of the first measurement gap other than the 1st first measurement gap and an intermediate moment of the 1st first measurement gap. An interval length between the intermediate moment of the first measurement gap and the start time point of the first measurement gap may be the same as an interval length between the intermediate moment of the 1st first measurement gap and the start time point of the first measurement gap.

In some embodiments, the second information may further include a first offset and a length of the first measurement period. The first offset may be an offset of the 1st first measurement gap among the at least two first measurement gaps in the first measurement gap, and the start time points of the at least two first measurement gaps may satisfy the following formulas (3) and (4):

$$SFN[i]\%(MGRP/10)=\lfloor(GO+GOO[i])/10\rfloor \qquad (3)$$

$$SF[i]=(GO+GOO[i])\%10 \qquad (4)$$

SFN[i] may be a radio frame number to which a start time point of an $i^{th}$ first measurement gap in the first measurement period belongs, SF[i] is a start subframe number of the $i^{th}$ first measurement gap in a radio frame to which the start time point of the $i^{th}$ first measurement gap belongs, the GO is the first offset, GOO[i] is an interval length between the $i^{th}$ first measurement gap and the 1st first measurement gap, i may be an integer greater than or equal to 1, and the MGRP is the length of the first measurement period. When i is 1, GOO[1] may be an interval length between the 1st first measurement gap and the 1st first measurement gap, that is, a value of GOO[1] may be 0.

In some embodiments, the second parameter may be in a value list form, and a value list may include an interval length between each of the first measurement gap other than the 1st first measurement gap in the first measurement period and the 1st first measurement gap. For example, as shown in Table 3, GOO[2] may be an interval length between the 2nd first measurement gap and the 1st measurement gap in the first measurement period, and GOO[3] may be an interval length between the 3rd first measurement gap and the 1st measurement gap in the first measurement period. The rest can be deduced by analogy. When the second parameter is in the value list form, the second information may further indicate a quantity of first measurement gaps in the first measurement period. For example, if a value of GOO[i] shown in Table 3 is 3, the quantity of first measurement gaps in the first measurement period may be four. In a value list of the second parameter shown in Table 3, interval lengths between first measurement gaps in the first measurement period and the 1st first measurement gap are in an arithmetic sequence. In this example, start time points of two adjacent first measurement gaps may have a same interval.

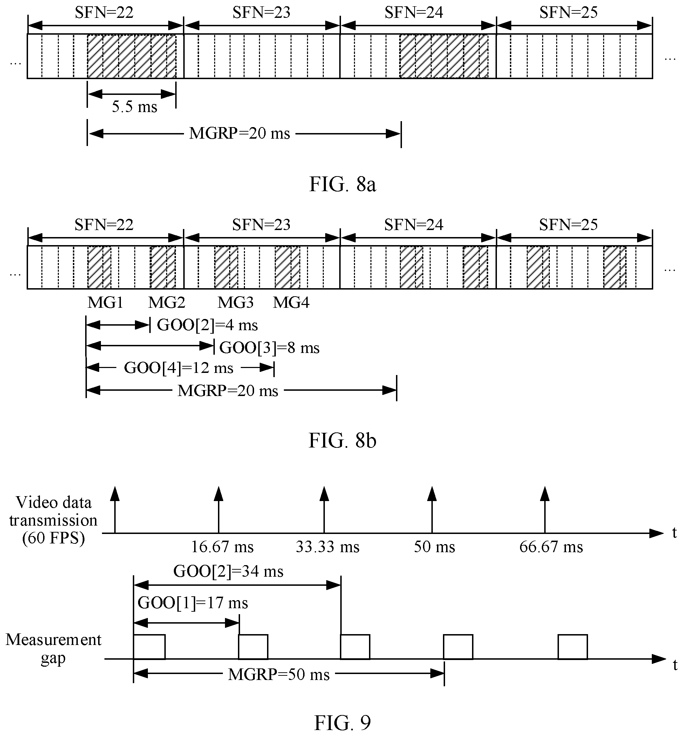

A start time point of each first measurement gap in the first measurement period satisfies the foregoing formulas (3) and (4). Then, when the first offset GO is 14 ms, and the length of the first measurement period is 20 ms, a subframe number corresponding to a start time point of the 1st measurement gap may be 4, that is, may be the 5th subframe in the SFN being 22; a subframe number corresponding to a start time point of the 2nd measurement gap may be 8, that is, may be the 9th subframe in the SFN being 22; a subframe number corresponding to a start time point of the 3rd measurement gap may be 1, that is, may be a 2nd subframe the SFN being 23; and a subframe number corresponding to a start time point of a 4th measurement gap may be 5, that is, may be a 6th subframe in the SFN being 23. When the lengths of the any two of the at least two first measurement gaps are the same, for example, may be 1.5 ms, a measurement gap mode of the terminal device may be shown in FIG. 8b, and the terminal device may perform inter-frequency measurement in a shadow area shown in the figure. FIG. 8a is an MG configuration mode in the conventional technology. According to the measurement method provided in embodiments of this application, measurement time periods in the first measurement period are distributed in a decentralized manner, so that the terminal device can perform sending in a closest slot in which the first measurement gap is not configured, to ensure reliability of a service and ensure inter-frequency measurement performance.

Table 3

| GOO[i] | Length/ms |
| --- | --- |
| GOO[2] | 4 |

(continued)

| GOO[i] | Length/ms |
|--------|-----------|
| GOO[3] | 8 |
| GOO[4] | 12 |

It should be noted that, similar to the foregoing case in which the second information includes the first parameter, when the second information includes the second parameter, the lengths of the at least two first measurement gaps may be the same, or may vary. When the lengths of the at least two first measurement gaps vary, the first information may include the length list of the first measurement gap, to indicate the length of each first measurement gap in the first measurement period. The measurement gap mode is described herein by using an example in which the lengths of the at least two first measurement gaps are the same, and the lengths of the at least two first measurement gaps should not be limited. The terminal device may alternatively agree on a length value of the first measurement gap with the network device. In this case, the network device may not need to include the lengths of the at least two first measurement gaps in the first configuration information. In addition, in the value list of the second parameter shown in Table 3, the interval lengths between the first measurement gaps in the first measurement period and the 1st first measurement gap are in the arithmetic sequence, and the interval lengths between the first measurement gaps and the 1st first measurement gap may be discrete values, that is, may not be in the arithmetic sequence. When the interval lengths between the first measurement gaps and the 1st first measurement gap are the discrete values, an interval between start time points of two adjacent first measurement gaps may vary.

In an example in which the second information includes the second parameter, an XR period may be further matched in the measurement method. As shown in FIG. 9, for an XR service with a period of 50/3, that is, an XR service with a frame rate of 60 FPS, a value of a first offset may be 0, and a corresponding start subframe number may be 0. In other words, a start subframe of a 1st first measurement gap in a first measurement period may be a 1st subframe in a radio frame to which the first measurement gap belongs, a length of the first measurement period may be 50 ms, and three first measurement gaps may be configured in the first measurement period, to match the XR service. The second parameter may be the value list, a value of GOO[2] may be 17 ms, and a value of GOO[3] may be 34 ms. In this way, an XR service data transmission period can match an MG measurement period, and there may be an offset of a measurement time period relative to an XR data transmission time period. The terminal device can perform gap measurement after XR data arrives, that is, after XR data transmission is completed, to better ensure reliability of an XR service and ensure cell measurement performance.

In a possible implementation, the second information may further include a third parameter, the third parameter may indicate the start time point of each of the at least two first measurement gaps, and the third parameter may be a measurement gap offset of each of the at least two first measurement gaps in the first measurement period.

The third parameter may be in a value list form, and a value list may include an offset of each of the at least two first measurement gaps in the first measurement period, and an offset of each first measurement gap may vary. For example, the value list of the third parameter may be shown in Table 4. An offset of a 1st first measurement gap in the first measurement period may be 24 ms, an offset of a 2nd measurement gap may be 28 ms, an offset of a 3rd measurement gap may be 32 ms, and an offset of a 4th measurement gap may be 36 ms. When the third parameter is in the value list form, the second information may further indicate a quantity of first measurement gaps in the first measurement period. For example, for an example of the third parameter shown in Table 4, there may be four first measurement gaps. Offsets of first measurement gaps shown in Table 4 are in an arithmetic sequence. When the lengths of the at least two first measurement gaps are the same, there may be a same interval length between two adjacent first measurement gaps in the first measurement period.

Table 4

| GO[i] | Value/ms |
|-------|----------|
| GO[1] | 14 |
| GO[2] | 18 |
| GO[3] | 12 |
| GO[4] | 16 |

In this implementation, the second information may further include a length MGRP of the first measurement period. Start time points of the at least two first measurement gaps in the first measurement period may satisfy the following formulas (5) and (6):

$$SFN[i]\%(MGRP/10)=\lfloor GO[i]/10 \rfloor \qquad (5)$$

$$SF[i]=GO[i]\%10 \qquad (6)$$

SFN[i] is a radio frame number of an $i^{th}$ first measurement gap among the at least two first measurement gaps, SF [i] is a start subframe number of the $i^{th}$ first measurement gap in a radio frame to which the $i^{th}$ first measurement gap belongs, GO[i] is an offset of the $i^{th}$ first measurement gap, namely, the third parameter, and i may be an integer greater than or equal to 1.

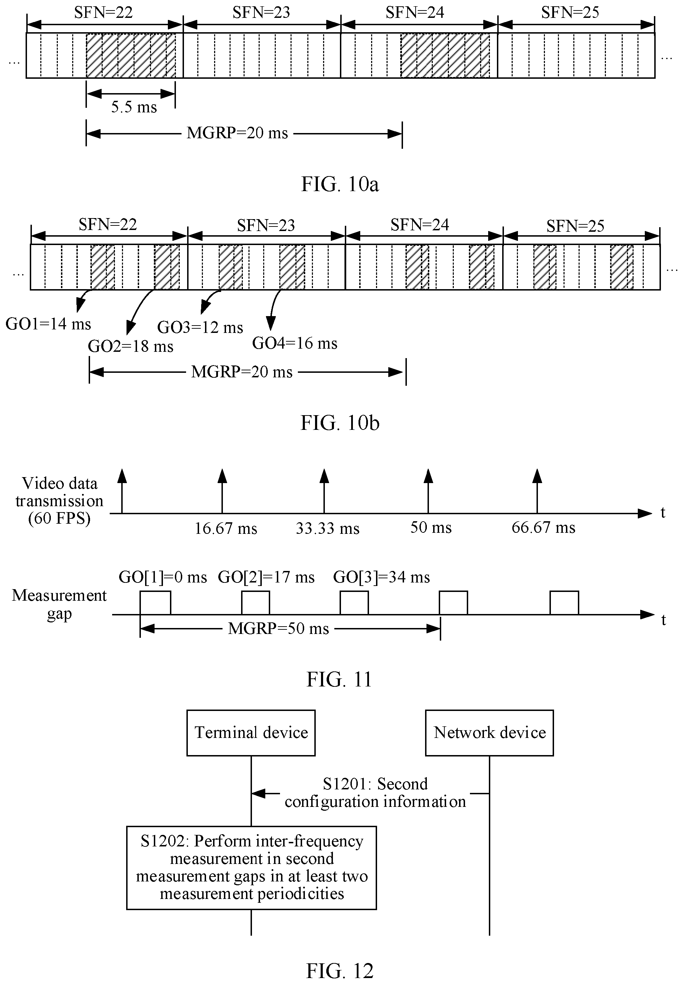

For example, when the length of the first measurement period is 20 ms, and the offset of each first measurement gap in the first measurement period is shown in Table 4, a subframe number corresponding to a start time point of the $1^{st}$ first measurement gap may be 4, that is, may be a $5^{th}$ subframe in the SFN being 22, and a subframe number corresponding to a start time point of a $2^{nd}$ first measurement gap may be 8, that is, may be a $9^{th}$ subframe in the SFN being 22, a subframe number corresponding to a start time point of a $3^{rd}$ first measurement gap may be 2, that is, may be a $3^{rd}$ subframe in the SFN being 23, and a subframe number corresponding to a start time point of a $4^{th}$ first measurement gap may be 6, that is, may be a $7^{th}$ subframe in the SFN being 23. When lengths of any two of the at least two first measurement gaps are the same, for example, are 1.5 ms, a measurement gap mode in the first measurement period may be shown FIG. 10b. FIG. 10a is an MG configuration mode in the conventional technology. According to the measurement method provided in embodiments of this application, measurement time periods in the first measurement period are distributed in a decentralized manner, so that the terminal device can perform sending in a closest slot in which the first measurement gap is not configured, to ensure reliability of a service and ensure inter-frequency measurement performance.

It should be noted that, similar to the foregoing case in which the second information includes the first parameter, when the second information includes the third parameter, the lengths of the at least two first measurement gaps may be the same, or may vary. When the lengths of the at least two first measurement gaps vary, the first information may include a length list of the first measurement gap, to indicate the length of each first measurement gap in the first measurement period. The measurement gap mode is described herein by using an example in which the lengths of the at least two first measurement gaps are the same, and the lengths of the at least two first measurement gaps should not be limited.

In an example in which the second information includes the third parameter, an XR period may be further matched in the measurement method. As shown in FIG. 11, for an XR service with a period of 50/3, that is, an XR service with a frame rate of 60 FPS, a length of a first measurement period may be 50 ms, and the first measurement period may include three first measurement gaps. In addition, an offset value of a $1^{st}$ first measurement gap in the first measurement period may be 0, an offset value of a $2^{nd}$ first measurement gap may be 17, and an offset value of a $3^{rd}$ first measurement gap may be 34. Therefore, an XR service data transmission period matches an MG measurement period, and there may be an offset of a measurement time period relative to an XR data transmission time period. The terminal device can perform gap measurement after XR data arrives, that is, after XR data transmission is completed, to better ensure reliability of an XR service and ensure cell measurement performance.

In a possible implementation, the second information may further include a fourth parameter, and the fourth parameter may indicate an interval length between start time points of two adjacent first measurement gaps among the at least two first measurement gaps.

In some embodiments, the second information may further include a first offset and a length of the first measurement period.

In an example, when an interval between start time points of the two adjacent first measurement gaps among the at least two first measurement gaps varies, the start time points of the at least two first measurement gaps may satisfy the following formulas (7) and (8):

$$\begin{cases} SFN[i]\%\left(\frac{MGRP}{10}\right)=\lfloor GO/10 \rfloor, \ i=1 \\ SFN[i]\%\left(\frac{MGRP}{10}\right)=\lfloor (GO+\sum_{i=1}^{n} G[i])/10 \rfloor, \ i\geq 2 \end{cases} \qquad (7)$$

$$SF[i]=(GO+G[i])\%10 \qquad (8)$$

SFN[i] is a radio frame number of an $i^{th}$ first measurement gap among the at least two first measurement gaps, SF [i] is a start subframe number of the $i^{th}$ first measurement gap in a radio frame to which the $i^{th}$ first measurement gap belongs, and G[i] is the fourth parameter and may be an interval length between a start time point of the $i^{th}$ first measurement gap in the first measurement period and a start time point of an $(i-1)^{th}$ first measurement gap. In this example, the second parameter may be in a value list form.

In another example, there may be a same interval between the start time points of the two adjacent first measurement gaps among the at least two first measurement gaps, and the start time points of the at least two first measurement gaps may satisfy (9) and (10):

$$SFN[i]\%(MGRP/10)=\lfloor(GO+(i-1)G)/10\rfloor, \quad (9)$$

$$SF[i]=(GO+GOO[i])\%10 \quad (10)$$

SFN[i] is a radio frame number of an $i^{th}$ first measurement gap among the at least two first measurement gaps, SF [i] is a start subframe number of the $i^{th}$ first measurement gap in a radio frame to which the $i^{th}$ first measurement gap belongs, G is the fourth parameter and may be an interval length between start time points of any two adjacent first measurement gaps in the first measurement period, and i may be an integer greater than or equal to 1. In this example, the second parameter may be a value.

When the second information includes the fourth parameter, lengths of the at least two first measurement gaps may be the same, or may vary.

In some embodiments, duration of each of the at least two first measurement gaps may be greater than or equal to 1.5 ms, to ensure a handover time period of the measurement gap and improve reliability of inter-frequency measurement.

According to the measurement method described in the foregoing embodiments, the at least two first measurement gaps are configured in the first measurement period, and there is the interval in time domain between the two adjacent first measurement gaps among the at least two first measurement gaps, so that the plurality of first measurement gaps in the first measurement period are distributed in a decentralized manner, thereby reducing conflicts between a measurement time period and a service data transmission time period. Only one measurement gap may alternatively be included in the first measurement period, or is referred to as a second measurement gap. The conflicts between the measurement time period and the service data transmission time period are reduced by adjusting and controlling a start time point of the second measurement gap. The method may be described in FIG. 12, and the method may include steps S1201 and S1202.

S1201: A terminal device receives second configuration information, and correspondingly, a network device sends the second configuration information, where the second configuration information includes third information and fourth information, the third information indicates lengths of at least two measurement periods, each of the at least two measurement periods includes a second measurement gap, the fourth information indicates a start time point of the second measurement gap in each of the at least two measurement periods, and the start time point of the second measurement gap in each measurement period matches a service data transmission period of the terminal device.

S1202: The terminal device performs inter-frequency measurement in the second measurement gap in each of the at least two measurement periods.

For step S1201, the third information may include a measurement period list (MGRP-list), where the measurement period list may include a length of each of the at least two measurement periods, and the lengths of the at least two measurement periods may be the same, or may vary. For example, for an XR service with a period of 50/3, that is, an XR service with a frame rate of 60 FPS, the lengths of the at least two measurement periods may be 50 ms, to match the XR service with the frame rate of 60 FPS. For another example, the lengths of the at least two measurement periods may alternatively be values such as 50 ms, 100 ms, and 150 ms respectively. There may be one second measurement gap included in each of the at least two measurement periods. There may be an offset between the second measurement gap in each measurement period and an XR service data transmission time period by configuring the start time point of the second measurement gap in each measurement period.

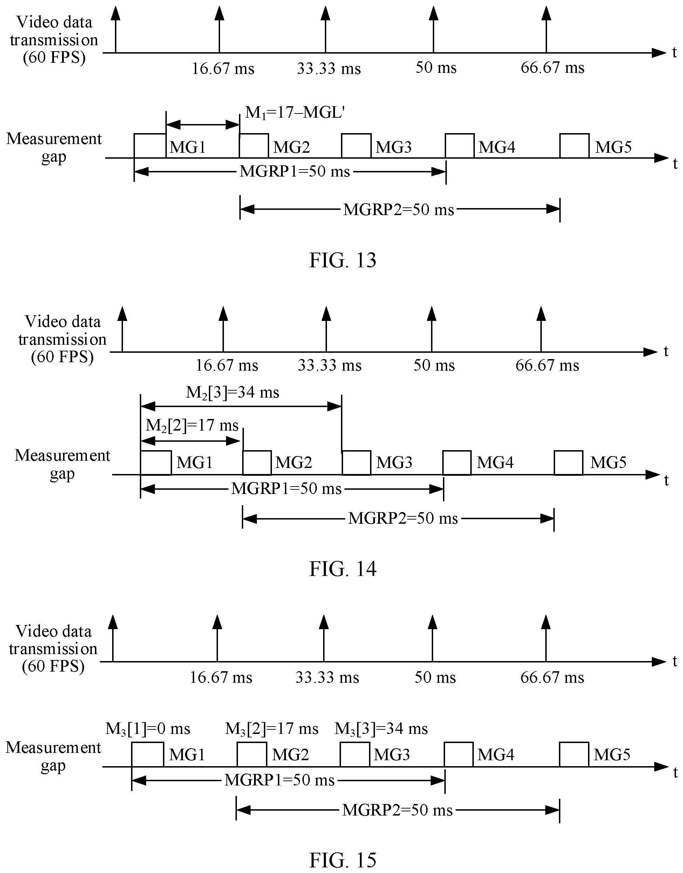

In an example, the fourth information may include a fifth parameter, the fifth parameter may indicate an interval length between second measurement gaps in two adjacent measurement periods in the at least two measurement periods, and the fifth parameter may be denoted as $M_1$. As shown in FIG. 13, for an XR service with a frame rate of 60 FPS, lengths of at least two measurement periods may be 50 ms, three second measurement gaps may be configured in each period of 50 ms, and the three second measurement gaps may be measurement gaps in three measurement periods that are disposed adjacent to each other. For example, an MG1 may be a second measurement gap in a $1^{st}$ measurement period in a plurality of measurement periods, an MG2 may be a second measurement gap in a $2^{nd}$ measurement period in the plurality of measurement periods, and an MG3 may be a second measurement gap in a $3^{rd}$ measurement period in the plurality of measurement periods. The rest can be deduced by analogy. The MG1, the MG2, and the MG3 may be in a same period of 50 ms. In other words, a start time point of the MG1 to a start time point of an MG4 may be the $1^{st}$ measurement period, and a length MGRP1 of the measurement period is 50 ms. Measurement time periods of the MG2 and the MG3 may be in time domain of the 1st measurement period by configuring start time points of the MG2 and the MG3. For example, a value of $M_1$ may be 17-MGL'. MGL' is a length of each second measurement gap of the at least two measurement periods, and lengths of second measurement gaps in the measurement periods may be the same. Therefore, an MG measurement period can match an XR service data transmission period, and there may be an offset between a measurement time period and an XR service data transmission time period. It can be ensured in offset time that data transmission of the terminal device is completed, and the terminal device can perform gap measurement after the XR data transmission is completed, to better ensure reliability of an XR service and ensure cell measurement performance.

In another example, the fourth information may include a sixth parameter, and the sixth parameter may indicate an interval length between a second measurement gap in a measurement period in the at least two measurement periods other than the 1st measurement period and a second measurement gap in the 1st measurement period. The interval length between the second measurement gap in the measurement period in the at least two measurement periods other than the 1st measurement period and the second measurement gap in the 1st measurement period may be an interval length between a start time point of the second measurement gap in the measurement period other than the 1st measurement period and a start time point of the second measurement gap in the 1st measurement period; may be an interval length between an end time point of the second measurement gap in the measurement period other than the 1st measurement period and an end time point of the second measurement gap in the 1st measurement period; or may be an interval length between an intermediate moment of the second measurement gap in the measurement period other than the 1st measurement period and an intermediate moment of the second measurement gap in the 1st measurement period, and there may be a same interval length between start time points of the second measurement gaps to which intermediate moments of the second measurement gap in the measurement period other than the 1st measurement period and the second measurement gap in the 1st measurement period belong. The sixth parameter may be denoted as $M_2[i]$, to be specific, an interval length between a second measurement gap in an $i^{th}$ measurement period and the second measurement gap in the 1st measurement period in the at least two measurement periods. As shown in FIG. 14, for an XR service with a frame rate of 60 FPS, lengths of at least two measurement periods may be 50 ms. Start time points of second measurement gaps in the at least two measurement periods are used as an example. An interval length $M_2[2]$ between a start time point of a second measurement gap in a 2nd measurement period and a start time point of a second measurement gap in a 1st measurement period may be 17, and an interval length $M_2[3]$ between a start time point of a second measurement gap in a 3rd measurement period and the start time point of the second measurement gap in the 1st measurement period may be 34. Therefore, three second measurement gaps can be configured in the periodicities of 50 ms, an MG measurement period can match an XR service data transmission period, and there may be an offset between a measurement time period and an XR service data transmission time period. It can be ensured in offset time that data transmission of the terminal device is completed, and the terminal device can perform gap measurement after the XR data transmission is completed, to better ensure reliability of an XR service and ensure cell measurement performance.

In still another example, the fourth information may further include a seventh parameter, the seventh parameter may indicate an offset value of a second measurement gap in each of the at least two measurement periods, and the seventh parameter may be denoted as $M_3[i]$, to be specific, an offset value of a second measurement gap in an $i^{th}$ measurement period in the at least two measurement periods. As shown in FIG. 15, the offset value $M_3[1]$ of the second measurement gap in the 1st measurement period in the at least two measurement periods may be 0, the offset value $M_3[2]$ of the second measurement period in the 2nd measurement period may be 17, and the offset value $M_3[3]$ of the second measurement period in the 3rd measurement period may be 34. Therefore, the MG measurement period can match the XR service data transmission period, and there is an offset between the measurement time period and the XR service data transmission time period. It can be ensured in offset time that data transmission of the terminal device is completed, and the terminal device may perform gap measurement after the XR data transmission is completed, to better ensure reliability of an XR service and ensure cell measurement performance.

In the embodiment described in FIG. 12, the second configuration information may include the third information to indicate the lengths of the at least two measurement periods, and the second configuration information may include the fourth information to indicate the start time point of the second measurement gap in each measurement period. The network device may also send the lengths of the at least two measurement periods to the terminal device via different configuration information. For example, the second configuration information may indicate a length of one of the at least two measurement periods, a length of another measurement period in the at least two measurement periods may be sent to the terminal device via third configuration information. Similarly, the network device may also configure a start time point of the second measurement gap in each of the at least two measurement periods for the terminal device via different configuration information. For example, the network device may include a start time point of one of the at least two measurement periods in the second configuration information, for example, include an offset of the second measurement gap in the measurement period, and send an offset of a second measurement in the another measurement period to the terminal device via the third configuration information.

Alternatively, there may be a plurality of second measurement gaps included in each of the at least two measurement periods. When each measurement period includes the second measurement gap, a method for configuring start time points of the plurality of second measurement gaps in each measurement period may be similar to that in the embodiments described in FIG. 5a and FIG. 5b to FIG. 11. To avoid repetition, details are not described herein again.

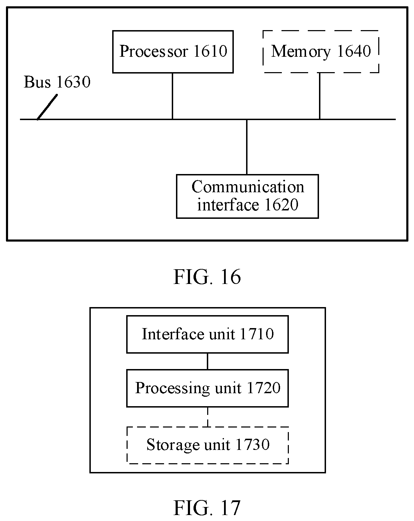

The foregoing describes the measurement methods provided in embodiments of this application. The following describes apparatuses provided in embodiments of this application with reference to FIG. 16 and FIG. 17.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 16 is a block diagram of a communication apparatus according to an embodiment of this application. The communication apparatus includes a processor 1610 and a communication interface 1620. The processor 1610 and the communication interface 1620 may be connected to each other through a bus 1630. The communication apparatus may be a terminal device, or may be a network device.

Optionally, the communication apparatus may further include a memory 1640. The memory 1640 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1640 is configured for related instructions and data.

The processor 1610 may be one or more central processing units (central procesing units, CPUs). When the processor 1610 is one CPU, the CPU may be a single-core CPU, or may be a multi-core CPU.

When the communication apparatus is the terminal device, for example, the processor 1610 is configured to perform the following operations: receiving first configuration information; and performing inter-frequency measurement in at least two first measurement gaps and the like.

When the communication apparatus is the network device, for example, the processor 1610 is configured to perform the following operations: sending first configuration information and the like.

The foregoing content is merely used as an example for description. The communication apparatus is the terminal device or the network device, and is responsible for performing methods or steps related to the terminal device or the network device in the foregoing method embodiments.

The foregoing descriptions are merely an example. For specific content, refer to the content shown in the foregoing method embodiments.

FIG. 17 is a block diagram of another communication apparatus according to an embodiment of this application. The communication apparatus may be a terminal device or a network device or may be a chip or a module in the terminal device or the network device, and is configured to implement the methods in the foregoing embodiments.

The communication apparatus includes an interface unit 1710 and a processing unit 1720. The interface unit 1710 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. A unified description is provided herein. Details are not described below again.

When the communication apparatus is the terminal device, for example, the interface unit 1710 may be configured to receive first configuration information and the like. The processing unit 1720 is configured to perform content related to steps of processing, measurement, and the like of the terminal device. For example, the processing unit 1720 is configured to perform inter-frequency measurement in at least two first measurement gaps and the like.

When the communication apparatus is the network device, for example, the interface unit 1710 may be configured to send the first configuration information. The processing unit 1720 is configured to perform content related to steps of processing, coordination, and the like of the network device.

The foregoing content is merely used as an example for description. The communication apparatus is the terminal device or the network device, and is responsible for performing methods or steps related to the terminal device or the network device in the foregoing method embodiments.

Optionally, the communication apparatus further includes a storage unit 1730. The storage unit 1730 is configured to store a program or code for performing the foregoing methods.

It should be noted that the apparatus embodiment shown in FIG. 17 may be used to implement the content described in FIG. 4. For specific performing steps and methods of the apparatus shown in FIG. 17, refer to the content described in the method embodiment corresponding to FIG. 4. The apparatus embodiment shown in FIG. 17 may also be used to implement the content described in FIG. 12. For specific performing steps and methods of the apparatus shown in FIG. 17 to the content described in the method embodiment corresponding to FIG. 12.

It should be noted that the apparatuses in FIG. 16 and FIG. 17 may alternatively be chips, chip systems, or the like.

This is not limited herein. When the apparatuses shown in FIG. 16 and FIG. 17 are the chips or the chip systems, the apparatuses can be configured to implement functions of the terminal device or the network device.

This application further provides a chip, including a processor, configured to invoke instructions from a memory and run the instructions stored in the memory, to cause a communication device on which the chip is installed to perform the methods in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the method in the foregoing examples. Optionally, the chip further includes the memory. The memory is configured to store a computer program or code.

This application further provides a processor, configured to couple to a memory, and configured to perform the methods and the functions related to the network device or the terminal device in any one of the foregoing embodiments.

This application further provides a computer program product including instructions. When the computer program product runs on a computer, the methods in the foregoing embodiments are implemented.

This application further provides a computer program. When the computer program is run on a computer, the methods in the foregoing embodiment are implemented.

This application further provides a computer-readable storage medium. The computer-readable storage medium stores a computer program. When the computer program is executed by a computer, the method in the foregoing embodiments is implemented.

A person of ordinary skill in the art may be aware that, in combination with the examples described in embodiments disclosed in this specification, units and algorithm steps may be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief description, for a specific operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, like a USB flash drive, a removable hard disk drive, a read-only memory (read-only memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A measurement method, comprising:

    receiving first configuration information, wherein the first configuration information comprises first information and second information, the first information indicates a length of each of at least two first measurement gaps, the at least two first measurement gaps are in a first measurement period, there is an interval in time domain between two adjacent first measurement gaps among the at least two first measurement gaps, and the second information indicates a start time point of each of the at least two first measurement gaps; and
    performing inter-frequency measurement in the at least two first measurement gaps.

2.  The method according to claim 1, wherein the first configuration information is further used to configure a quantity of first measurement gaps in the first measurement period.

3.  The method according to claim 1 or 2, wherein the second information comprises a first parameter, and the first parameter indicates an interval length between two adjacent first measurement gaps among the at least two first measurement gaps.

4.  The method according to claim 3, wherein the second information further comprises a first offset and a length of the first measurement period,
    a start time point of a 1st first measurement gap among the at least two first measurement gaps is determined based on the first offset and the length of the first measurement period, and a start time point of a first measurement gap among the at least two first measurement gaps other than the 1st first measurement gap is determined based on the start time point of the 1st first measurement gap, lengths of the at least two first measurement gaps, and the first parameter.

5.  The method according to claim 3 or 4, wherein a value range of the first parameter meets the following condition:

    $$0 < \text{MGG} \leq \lfloor (\text{MGRP} - L)/(N - 1) \rfloor$$, wherein the MGG is a value of the first parameter, the MGRP is the length of the first measurement period, L is a total length of the at least two first measurement gaps, N is the quantity of first measurement gaps in the first measurement period, and $\lfloor \rfloor$ represents rounding down.

6.  The method according to claim 1 or 2, wherein the second information comprises a second parameter, and the second parameter indicates an interval length between a first measurement gap among the at least two first measurement gaps other than a 1st first measurement gap in the first measurement period and the 1st first measurement gap.

7.  The method according to claim 6, wherein the second information further comprises a first offset and a length of the first measurement period, and start time points of the at least two first measurement gaps satisfy:

    $$\text{SFN}[i] \% (\text{MGRP}/10) = \lfloor (\text{GO} + \text{GOO}[i])/10 \rfloor,$$

    and

    $$\text{SF}[i] = (\text{GO} + \text{GOO}[i]) \% 10,$$

    wherein
    % indicates a modulo operation, $\lfloor \rfloor$ represents rounding down, SFN[i] is a radio frame number to which a start time point of an $i^{th}$ first measurement gap belongs, SF[i] is a start subframe number of the start time point of the $i^{th}$ first measurement gap in a radio frame to which the start time point of the $i^{th}$ first measurement gap belongs, the GO is the first offset, GOO[i] is an interval length between the $i^{th}$ first measurement gap and the 1st first measurement gap, i is an integer greater than or equal to 1, and the MGRP is the length of the first measurement period.

8.  The method according to claim 1 or 2, wherein the second information comprises a third parameter, and the third parameter indicates the start time point of each of the at least two first measurement gaps.

9.  The method according to claim 8, wherein the second information further comprises a length of the first measurement period, and start time points of the at least two first measurement gaps satisfy:

$$SFN[i]\%(MGRP/10)=\lfloor(GO[i]/10)\rfloor,$$

and

$$SF[i]=GO[i]\%10,$$

wherein

% indicates a remainder function, $\lfloor\rfloor$ is a rounding-down function, SFN[i] is a radio frame number of an ith first measurement gap, SF[i] is a start subframe number of the ith first measurement gap in a radio frame to which the ith first measurement gap belongs, GO[i] indicates a start time point of the ith first measurement gap, i is an integer greater than or equal to 1, and the MGRP is the length of the first measurement period.

10. A measurement apparatus, comprising:

an interface unit, configured to receive first configuration information, wherein the first configuration information comprises first information and second information, the first information indicates a length of each of at least two first measurement gaps, the at least two first measurement gaps are in a first measurement period, there is an interval in time domain between two adjacent first measurement gaps among the at least two first measurement gaps, and the second information indicates a start time point of each of the at least two first measurement gaps; and

a processing unit, configured to perform inter-frequency measurement in the at least two first measurement gaps.

11. The apparatus according to claim 10, wherein the first configuration information is further used to configure a quantity of first measurement gaps in the first measurement period.

12. The apparatus according to claim 10 or 11, wherein the second information comprises a first parameter, and the first parameter indicates an interval length between two adjacent first measurement gaps among the at least two first measurement gaps.

13. The apparatus according to claim 12, wherein the second information further comprises a first offset and a length of the first measurement period; and

a start time point of a 1st first measurement gap among the at least two first measurement gaps is determined based on the first offset and the length of the first measurement period, and a start time point of a first measurement gap among the at least two first measurement gaps other than the 1st first measurement gap is determined based on the start time point of the 1st first measurement gap, lengths of the at least two first measurement gaps, and the first parameter.

14. The apparatus according to claim 12 or 13, wherein a value range of the first parameter meets the following condition:

$0<MGG\leq\lfloor(MGRP-L)/(N-1)\rfloor$, wherein the MGG is a value of the first parameter, the MGRP is the length of the first measurement period, L is a total length of the at least two first measurement gaps, N is the quantity of first measurement gaps in the first measurement period, and $\lfloor\rfloor$ represents rounding down.

15. The apparatus according to claim 10 or 11, wherein the second information comprises a second parameter, and the second parameter indicates an interval length between a first measurement gap among the at least two first measurement gaps other than a 1st first measurement gap in the first measurement period and the 1st first measurement gap.

16. The apparatus according to claim 15, wherein the second information further comprises a first offset and a length of the first measurement period, and start time points of the at least two first measurement gaps satisfy:

$$SFN[i]\%(MGRP/10)=\lfloor(GO+GOO[i])/10)\rfloor,$$

and

$$SF[i]=(GO+GOO[i])\%10,$$

20

wherein
% indicates a modulo operation, $\lfloor \rfloor$ represents rounding down, SFN[i] is a radio frame number to which a start time point of an $i^{th}$ first measurement gap belongs, SF[i] is a start subframe number of the start time point of the $i^{th}$ first measurement gap in a radio frame to which the start time point of the $i^{th}$ first measurement gap belongs, the GO is the first offset, GOO[i] is an interval length between the $i^{th}$ first measurement gap and the $1^{st}$ first measurement gap, i is an integer greater than or equal to 1, and the MGRP is the length of the first measurement period.

17. The apparatus according to claim 10 or 11, wherein the second information comprises a third parameter, and the third parameter indicates the start time point of each of the at least two first measurement gaps.

18. The apparatus according to claim 17, wherein the second information further comprises a length of the first measurement period, and start time points of the at least two first measurement gaps satisfy:

$$SFN[i]\%(MGRP/10)=\lfloor(GO[i]/10)\rfloor,$$

and

$$SF[i]=GO[i]\%10,$$

wherein
% indicates a remainder function, $\lfloor \rfloor$ is a rounding-down function, SFN[i] is a radio frame number of an $i^{th}$ first measurement gap, SF[i] is a start subframe number of the $i^{th}$ first measurement gap in a radio frame to which the $i^{th}$ first measurement gap belongs, GO[i] indicates a start time point of the $i^{th}$ first measurement gap, i is an integer greater than or equal to 1, and the MGRP is the length of the first measurement period.

19. A communication apparatus, comprising a processor, wherein the processor is configured to cause, by executing a computer program or instructions or by using a logic circuit, the communication apparatus to perform the method according to any one of claims 1 to 9.

20. A computer-readable storage medium, wherein the computer-readable storage medium stores a computer program or instructions, and when the computer program or the instructions are run on a computer, the method according to any one of claims 1 to 9 is performed.

21. A computer program product, comprising instructions, wherein when the instructions are run on a computer, the method according to any one of claims 1 to 9 is performed.

FIG. 1

FIG. 2

FIG. 3

Terminal device

Network device

S401: First configuration information

S402: Perform inter-frequency measurement in at least two first measurement gaps

FIG. 4

SFN=22    SFN=23    SFN=24    SFN=25

5.5 ms

MGRP=20 ms

FIG. 5a

SFN=22    SFN=23    SFN=24    SFN=25

MGL1    MGG1    MGL3
MGL2    MGG2

MGRP=20 ms

FIG. 5b

FIG. 6a

FIG. 6b

FIG. 7

FIG. 8a

FIG. 8b

FIG. 9

FIG. 10a

FIG. 10b

FIG. 11

FIG. 12

Video data
transmission
(60 FPS)

16.67 ms    33.33 ms    50 ms    66.67 ms    t

$M_1=17-MGL'$

Measurement
gap

MG1    MG2    MG3    MG4    MG5    t

MGRP1=50 ms

MGRP2=50 ms

FIG. 13

Video data
transmission
(60 FPS)

16.67 ms    33.33 ms    50 ms    66.67 ms    t

$M_2[3]=34$ ms

$M_2[2]=17$ ms

Measurement
gap

MG1    MG2    MG3    MG4    MG5    t

MGRP1=50 ms

MGRP2=50 ms

FIG. 14

Video data
transmission
(60 FPS)

16.67 ms    33.33 ms    50 ms    66.67 ms    t

$M_3[1]=0$ ms    $M_3[2]=17$ ms    $M_3[3]=34$ ms

Measurement
gap

MG1    MG2    MG3    MG4    MG5    t

MGRP1=50 ms

MGRP2=50 ms

FIG. 15

| Processor 1610 | Memory 1640 |

Bus 1630

Communication
interface 1620

FIG. 16

Interface unit 1710

Processing unit 1720

Storage unit 1730

FIG. 17

## INTERNATIONAL SEARCH REPORT

| International application No. |
|---|
| **PCT/CN2024/123350** |

| A. | CLASSIFICATION OF SUBJECT MATTER |
|---|---|

H04W 24/08(2009.01)i

According to International Patent Classification (IPC) or to both national classification and IPC

| B. | FIELDS SEARCHED |
|---|---|

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, CNKI, ENTXT, ENTXTC, VEN, 3GPP: 测量, 测量间隔, 测量间隙, 周期, 多个, 个, 数目, 数量, 多, 至少, 长度, 持续时间, 起始, 开始, 异频, 频间, 频率间, 配置, 指示, measur+, interval, measurement gap, gap, MG, MGRP, period, plurality, at least, length, start, time, inter-frequency, configuration, indicat+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108282794 A (HUAWEI TECHNOLOGIES CO., LTD.) 13 July 2018 (2018-07-13) description, paragraphs 0002-0003, 0066-0068, and 0096-0325, and figures 1-12 | 1-21 |
| X | CN 113473549 A (HONOR DEVICE CO., LTD.) 01 October 2021 (2021-10-01) description, paragraphs 0002-0132, and figures 1-4 | 1-21 |
| X | WO 2019100396 A1 (HUAWEI TECHNOLOGIES CO., LTD.) 31 May 2019 (2019-05-31) description, pages 8-21 | 1-21 |
| A | CN 115707110 A (HUAWEI TECHNOLOGIES CO., LTD.) 17 February 2023 (2023-02-17) entire document | 1-21 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 December 2024** | **23 December 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/123350**

| Patent document cited in search report | | | Publication date (day/month/year) | Patent family member(s) | | | Publication date (day/month/year) |
|---|---|---|---|---|---|---|---|
| CN | 108282794 | A | 13 July 2018 | WO | 2018126847 | A1 | 12 July 2018 |
| | | | | CN | 113891449 | A | 04 January 2022 |
| CN | 113473549 | A | 01 October 2021 | WO | 2021196965 | A1 | 07 October 2021 |
| WO | 2019100396 | A1 | 31 May 2019 | EP | 3703410 | A1 | 02 September 2020 |
| | | | | US | 2020374723 | A1 | 26 November 2020 |
| | | | | CN | 110915252 | A | 24 March 2020 |
| CN | 115707110 | A | 17 February 2023 | WO | 2023010951 | A1 | 09 February 2023 |
| | | | | EP | 4369822 | A1 | 15 May 2024 |
| | | | | US | 2024188071 | A1 | 06 June 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311435442